# EUROPEAN PATENT APPLICATION

(11) **EP 4 814 067 A1**
(43) Date of publication of application: **30.09.2026**
(21) Application number: 26167058.2
(22) Date of filing: 24.03.2026
(51) Int. Cl.: C09D 11/38, C09D 11/322

(54) **LIQUID FOR INKJET PRINTER, INKJET RECORDING APPARATUS, AND INKJET EJECTION METHOD**

(30) Priority: 27.03.2025 JP 2025054178
(71) Applicant: BROTHER KOGYO KABUSHIKI KAISHA, Aichi-ken 467-8561 (JP)
(72) Inventor: MIYAGAWA, Nanako, Nagoya, 467-8562 (JP); TSUZAKA, Yuka, Nagoya, 467-8562 (JP); ISOGAI, Masato, Nagoya, 467-8562 (JP); NISHIDA, Satoshi, Nagoya, 467-8562 (JP)
(74) Representative: Kuhnen & Wacker Patent- und Rechtsanwaltsbüro PartG mbB

(57) **Abstract**

A liquid for an inkjet printer is provided. The liquid contains a plant-derived penetrant including plant-derived 1,3-propanediol, and a plant-derived preservative including β-phenylacrylic acid. The pH of the liquid is 7.0 or higher.

## Description

### TECHNICAL FIELD

The present disclosure relates to a liquid for an inkjet printer, an inkjet recording apparatus, and an inkjet ejection method.

### BACKGROUND ART

As an example of an ink for inkjet recording, JP 2008-239733A discloses the ink for inkjet recording. The ink for inkjet recording disclosed in JP 2008-239733A comprising a preservative and a solvent functioning as a penetrant.

### DESCRIPTION

As disclosed in JP 2008-239733A, preservatives and penetrants contained in inkjet printer liquids, including inkjet recording inks, are typically derived from petroleum-based raw materials. However, in recent years, from the viewpoint of decarbonization, it has become desirable to replace such petroleum-derived raw materials with plant-derived raw materials in inkjet printer liquids.

β-Phenylacrylic acid is known as a plant-derived preservative; however, because it has low solubility in water, a penetrant serving as a solvent is typically used together with it. On the other hand, from the viewpoint of environmental protection, it is also desirable that the penetrant be plant-derived.

Accordingly, it is an object of the present disclosure to provide a liquid for an inkjet printer that exhibits excellent preservability and solubility, by using β-phenylacrylic acid as a preservative and employing a plant-derived penetrant, as well as to provide an inkjet recording apparatus and an inkjet ejection method using the liquid for an inkjet printer.

To achieve the above-described object, a liquid for an inkjet printer according to the present disclosure comprises a plant-derived penetrant comprising plant-derived 1,3-propanediol, and a plant-derived preservative comprising β-phenylacrylic acid.

The inkjet recording apparatus according to the present disclosure comprises an inkjet head, and the inkjet head is configured to eject the liquid for an inkjet printer according to the present disclosure.

The inkjet ejection method according to the present disclosure comprises an ejection step in which the liquid for an inkjet printer according to the present disclosure is ejected from an inkjet head.

According to the present disclosure, it is possible to provide a liquid for an inkjet printer, an inkjet recording apparatus, and an inkjet ejection method that exhibit excellent preservability and solubility by using β-phenylacrylic acid as a preservative and employing a plant-derived penetrant.

FIG. 1 is a schematic perspective view of an example of an inkjet recording apparatus.

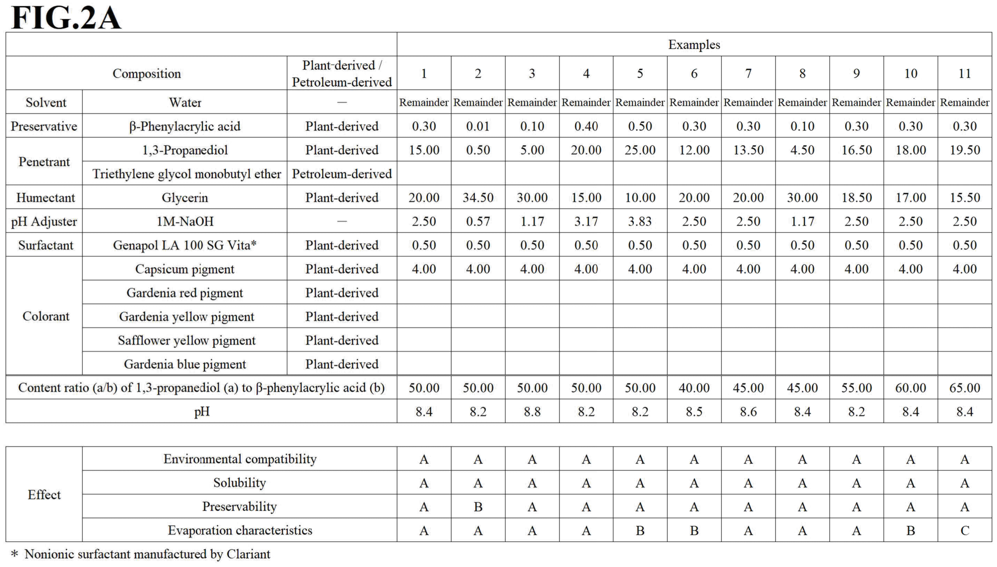

FIG. 2A is a table 1 that indicates aqueous ink compositions and evaluation results for Examples 1 to 11.

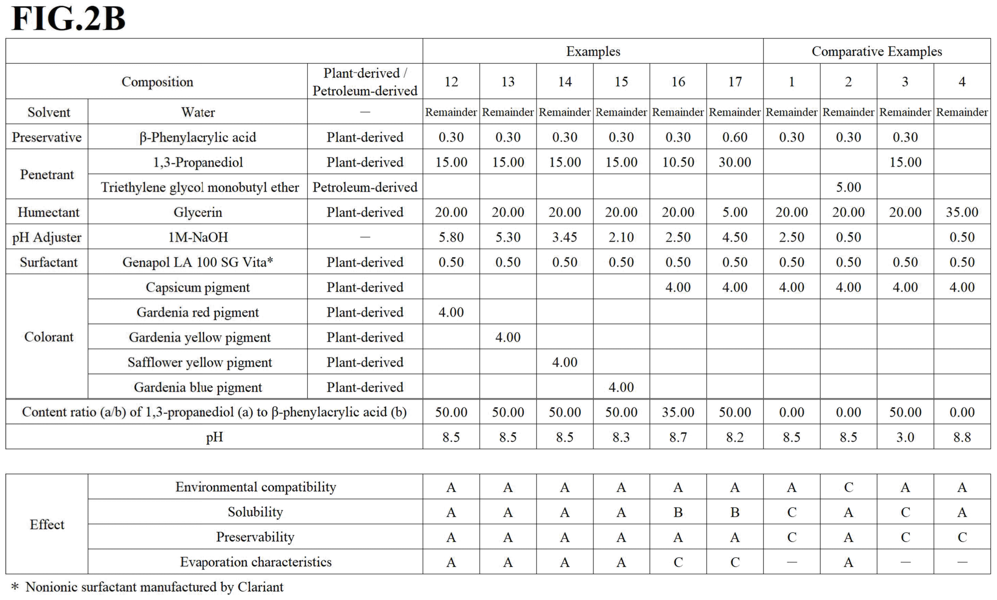

FIG. 2B is a table 1 that indicates aqueous ink compositions and evaluation results for Examples 12 to 17 and Comparative Examples 1 to 4.

In the present disclosure, the term "weight" may be interpreted as "mass" unless otherwise specified. For example, "weight ratio" may be interpreted as "mass ratio" unless otherwise specified, and "weight %" may be interpreted as "mass %" unless otherwise specified.

In the present disclosure, when numerical ranges of raw materials or parameters are indicated, the numerical ranges include their lower and upper limit values unless otherwise specified. For example, when a numerical range of "from 1 to 10" is indicated, the numerical range includes the lower limit value of 1 and the upper limit value of 10 (i.e., 1 or more and 10 or less). In addition, in the present disclosure, when multiple upper limit values and/or multiple lower limit values are exemplified, any combination of the exemplified upper limit values and lower limit values may be used to define a numerical range.

In the present disclosure, "weight %" is expressed to two decimal places, and the value is rounded to the nearest number at the third decimal place. The "content ratio (a/b)" described in the present disclosure is expressed to two decimal places, and the value is rounded to the nearest number at the third decimal place. The "pH" described in the present disclosure is expressed to one decimal place, and the value is rounded to the nearest number at the second decimal place.

In the present disclosure, the term "plant-derived" refers to a material or raw material obtained from plants. In addition, in the present disclosure, the term "non-plant-derived" includes, for example, "petroleum-derived" materials. The term "petroleum-derived" refers to a material or raw material obtained from chemical substances produced from crude oil or obtained through the refining or processing of crude oil. Whether a material or raw material is "plant-derived" or "petroleum-derived" can be determined, for example, by whether the material contains ¹⁴C. When the material is plant-derived, it contains ¹⁴C; when the material is petroleum-derived, it does not contain ¹⁴C. The amount of ¹⁴C may be measured and calculated in accordance with, for example, the carbon method (¹⁴C method). Specifically, the carbon method is a technique in which an accelerator mass spectrometer (AMS) is used to measure the types and ratios of carbon isotopes (¹²C, ¹³C, and ¹⁴C) contained in a specimen (the liquid for an inkjet printer). The amount of ¹⁴C in the specimen is then calculated based on the types and ratios of the carbon isotopes.

In the present disclosure, the term "ejection" is not limited to a case in which the printer liquid is discharged by an ejection mechanism inside an inkjet head. The term also includes cases in which the printer liquid is discharged by a suction mechanism or a pressurizing mechanism located outside the inkjet head.

In the present disclosure, when mechanisms are described in the following embodiments and examples, the described mechanisms are merely assumed and are not intended to limit the present disclosure to those mechanisms.

### (Liquid for Inkjet Printer)

The liquid for an inkjet printer according to the present disclosure (hereinafter also referred to as "printer liquid") will be described below. The printer liquid of the present disclosure may be, for example, a colored ink or a colorless ink. The colored ink may include, for example, a colorant described later. The colorless printer liquid may be, for example, a printer liquid that does not include the colorant described later.

In addition, the printer liquid of the present disclosure may be a pretreatment agent that lands on a recording medium before a colored ink lands on the recording medium, mixes with the subsequently landed ink, and contributes to color development. Furthermore, the printer liquid of the present disclosure may be a post-treatment agent that lands on the recording medium after a colored ink lands, mixes with the ink, and contributes to color development. The printer liquid of the present disclosure may also be a maintenance liquid that dissolves ink used for recording, reduces the viscosity of the ink, and assists in removing ink adhered to components such as the inkjet head. Moreover, the printer liquid of the present disclosure may be a shipping liquid that is placed in a flow path of an inkjet head when an inkjet recording apparatus is shipped, and that is discharged from a cap outside the inkjet head when an ink from a cartridge is introduced into the flow path during use of the inkjet recording apparatus, thereby being pushed out.

The printer liquid of the present disclosure comprises a plant-derived penetrant and a plant-derived preservative.

The printer liquid of the present disclosure comprises a plant-derived penetrant comprising plant-derived 1,3-propanediol. Examples of the plant-derived penetrant may further include alkyl alcohols having 1 to 4 carbon atoms, such as methanol, ethanol, butanol, propanol, and isopropanol, and alkylene diols. Examples of the alkylene diols include 1,2-hexanediol, 1,2-heptanediol, 1,3-propanediol, 1,2-butanediol, 1,3-butanediol, 1,4-butanediol, 2,3-butanediol, 3-methyl-1,3-butanediol, 1,2-pentanediol, 1,5-pentanediol, 1,6-hexanediol, 2-methyl-2,4-pentanediol, and 3-methyl-1,5-pentanediol. The plant-derived penetrant may include one type of plant-derived penetrant or may include two or more types of plant-derived penetrants.

The content of the 1,3-propanediol based on the total weight of the printer liquid may have a lower limit selected from 0.10 wt% or more, 0.50 wt% or more, 1.00 wt% or more, 2.00 wt% or more, 3.00 wt% or more, 4.00 wt% or more, and 4.50 wt% or more. The content of the 1,3-propanediol may have an upper limit selected from 50.00 wt% or less, 30.00 wt% or less, 25.00 wt% or less, 20.00 wt% or less, 15.00 wt% or less, 10.00 wt% or less, and 5.00 wt% or less. Furthermore, the content of the 1,3-propanediol may be, for example, from 4.50 wt% to 20.00 wt%.

The printer liquid of the present disclosure may, for example, contain no penetrant that is non-plant-derived. In addition, the printer liquid of the present disclosure may contain no petroleum-derived penetrant.

The content of the plant-derived penetrant based on the total weight of the printer liquid may be, for example, from 0.10 wt% to 50.00 wt%, from 0.20 wt% to 40.00 wt%, or from 0.50 wt% to 30.00 wt%.

The printer liquid of the present disclosure comprises a plant-derived preservative comprising β-phenylacrylic acid. Examples of the plant-derived preservative may further include lignosulfonic acid, ferulic acid, coumaric acid, eugenol, anethole, coniferyl alcohol, and cinnamyl alcohol. The printer liquid of the present disclosure may contain no petroleum-derived preservative. The printer liquid of the present disclosure may also contain no preservative that is non-plant-derived.

The content of the β-phenylacrylic acid based on the total weight of the printer liquid may have a lower limit selected from 0.01 wt% or more, 0.05 wt% or more, and 0.10 wt% or more. The content of the β-phenylacrylic acid may have an upper limit selected from 1.00 wt% or less, 0.50 wt% or less, 0.40 wt% or less, and 0.30 wt% or less. Furthermore, the content of the β-phenylacrylic acid may be, for example, from 0.01 wt% to 0.50 wt%, or from 0.10 wt% to 0.40 wt%.

The content of the plant-derived preservative based on the total weight of the printer liquid may be, for example, from 0.01 wt% to 1.00 wt%, from 0.01 wt% to 0.50 wt%, or from 0.10 wt% to 0.40 wt%.

In the printer liquid of the present disclosure, the content ratio (a/b) of the content (a) of the 1,3-propanediol to the content (b) of the β-phenylacrylic acid may have a lower limit selected from 30.00 or more, 35.00 or more, 40.00 or more, 45.00 or more, and 50.00 or more.

The content ratio (a/b) may have an upper limit selected from 70.00 or less, 65.00 or less, 60.00 or less, and 55.00 or less. Furthermore, the content ratio (a/b) may be, for example, from 30.00 to 70.00, from 35.00 to 65.00, from 40.00 to 60.00, or from 45.00 to 55.00.

The printer liquid of the present disclosure may include a colorant. The colorant may be, for example, a plant-derived colorant. The printer liquid of the present disclosure may include only plant-derived colorants as the colorant. Examples of the colorant include capsicum pigment, gardenia red pigment, gardenia yellow pigment, safflower yellow pigment, gardenia blue pigment, safflower red pigment, turmeric pigment, madder pigment, lithospermum pigment, annatto pigment, red radish pigment, red cabbage pigment, red rice pigment, elderberry pigment, cowberry pigment, gooseberry pigment, cranberry pigment, salmonberry pigment, perilla pigment, thimbleberry pigment, strawberry pigment, dark sweet cherry pigment, cherry pigment, hibiscus pigment, huckleberry pigment, grape juice pigment, grape skin pigment, blackcurrant pigment, blackberry pigment, blueberry pigment, plum pigment, whortleberry pigment, boysenberry pigment, mulberry pigment, purple sweet potato pigment, purple corn pigment, purple yam pigment, raspberry pigment, redcurrant pigment, loganberry pigment, beet-red pigment, red koji pigment, yellow koji pigment, marigold pigment, saffron pigment, indigo, kusagi pigment, spirulina blue pigment, and vegetable carbon pigments (including binchotan charcoal, bamboo charcoal, activated charcoal, white charcoal, black charcoal, molded wood charcoal, ogatan charcoal, plum charcoal, mangrove charcoal, and coconut-shell charcoal). The colorant may be, for example, capsicum pigment, gardenia red pigment, gardenia yellow pigment, safflower yellow pigment, or gardenia blue pigment. The colorant may also include two colorants of the same color. For example, the colorant may include capsicum pigment and gardenia red pigment, or may include gardenia yellow pigment and safflower yellow pigment.

Furthermore, the colorant may include two pigments having different colors. For example, the colorant may include capsicum pigment and gardenia yellow pigment; capsicum pigment and safflower yellow pigment; capsicum pigment and gardenia blue pigment; gardenia red pigment and gardenia yellow pigment; gardenia red pigment and safflower yellow pigment; or gardenia red pigment and gardenia blue pigment. In addition, the colorant may include, for example, gardenia yellow pigment and gardenia blue pigment, or safflower yellow pigment and gardenia blue pigment. The colorant may also include three pigments. For example, the colorant may include capsicum pigment, gardenia red pigment, and gardenia yellow pigment; capsicum pigment, gardenia red pigment, and safflower yellow pigment; capsicum pigment, gardenia red pigment, and gardenia blue pigment; capsicum pigment, gardenia yellow pigment, and safflower yellow pigment; gardenia red pigment, gardenia yellow pigment, and safflower yellow pigment; or gardenia yellow pigment, safflower yellow pigment, and gardenia blue pigment. Furthermore, the colorant may include four pigments, such as capsicum pigment, gardenia red pigment, gardenia yellow pigment, and safflower yellow pigment.

The colorant may include, for example, three pigments having different colors. For instance, the colorant may include capsicum pigment, gardenia yellow pigment, and gardenia blue pigment; capsicum pigment, safflower yellow pigment, and gardenia blue pigment; gardenia red pigment, gardenia yellow pigment, and gardenia blue pigment; or gardenia red pigment, safflower yellow pigment, and gardenia blue pigment. Furthermore, the colorant may include four pigments. For example, the colorant may include capsicum pigment, gardenia red pigment, gardenia yellow pigment, and gardenia blue pigment; capsicum pigment, gardenia red pigment, safflower yellow pigment, and gardenia blue pigment; capsicum pigment, gardenia yellow pigment, safflower yellow pigment, and gardenia blue pigment; or gardenia red pigment, gardenia yellow pigment, safflower yellow pigment, and gardenia blue pigment. The colorant may further include five pigments. For example, the colorant may include capsicum pigment, gardenia red pigment, gardenia yellow pigment, safflower yellow pigment, and gardenia blue pigment.

The printer liquid of the present disclosure may include, as the colorant, a pigment that is non-plant-derived or a dye that is non-plant-derived.

Examples of the pigment include carbon black, inorganic pigments, and organic pigments. Examples of the carbon black include furnace black, lamp black, acetylene black, and channel black. Examples of the inorganic pigments include titanium oxide, iron oxide-based inorganic pigments, and carbon black-based inorganic pigments. Examples of the organic pigments include azo pigments such as azo lakes, insoluble azo pigments, condensed azo pigments, and chelate azo pigments; polycyclic pigments such as phthalocyanine pigments, perylene and perinone pigments, anthraquinone pigments, quinacridone pigments, dioxazine pigments, thioindigo pigments, isoindolinone pigments, and quinophthalone pigments; dye-lake pigments such as basic dye lake pigments and acid dye lake pigments; nitro pigments; nitroso pigments; aniline black daylight fluorescent pigments; and the like. Other pigments may also be used as long as they are dispersible in an aqueous phase. Specific examples of the pigments include C.I. Pigment White 1, 4, 5, 6, 7, 18, 19, 20, 21, 22, 23, 24, 25, 26, 27, and 28; C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of the above pigments.

The pigment may be dispersed in the solvent by a resin dispersant (also referred to as a resin-dispersed pigment). The resin dispersant may be, for example, a conventionally known polymer dispersant (also referred to as a pigment-dispersing resin or resin dispersant). In the printer liquid of the present disclosure, the pigment may also be encapsulated with a polymer.

The resin dispersant may include, for example, a monomer containing at least one of methacrylic acid and acrylic acid, and commercially available products may be used. The resin dispersant may be a block copolymer, graft copolymer, or random copolymer, or a salt thereof, formed from two or more monomers selected from hydrophobic monomers such as styrene, styrene derivatives, vinylnaphthalene, vinylnaphthalene derivatives, and fatty alcohol esters of α,β-ethylenically unsaturated carboxylic acids, and monomers such as acrylic acid, acrylic acid derivatives, maleic acid, maleic acid derivatives, itaconic acid, itaconic acid derivatives, fumaric acid, and fumaric acid derivatives. Examples of the commercially available resin dispersants include Joncryl^{®} 611, Joncryl^{®} 60, Joncryl^{®} 586, Joncryl^{®} 687, Joncryl^{®} 63, and Joncryl^{®} HPD-296, manufactured by BASF; Disperbyk^{®} 190 and Disperbyk^{®} 191, manufactured by BYK-Chemie; and Solsperse^{™} 20000 and Solsperse^{™} 27000, manufactured by Lubrizol Corporation.

As a method for dispersing the pigment using the pigment-dispersing resin, a method in which the pigment is dispersed by using a dispersing device may be employed. The dispersing device used for dispersing the pigment is not particularly limited as long as it is a general dispersing machine, and examples thereof include a ball mill, a roll mill, and a sand mill (for example, a high-speed type).

The pigment may be a self-dispersible pigment. The self-dispersible pigment is, for example, a pigment that can be dispersed in water without using a dispersant, by having at least one hydrophilic functional group such as a carbonyl group, a hydroxyl group, a carboxyl group, a sulfonic acid group, or a phosphoric acid group, or a salt thereof, introduced into the pigment particles directly or via another group through a chemical bond. The self-dispersible pigment may be a pigment treated by any of the methods described in, for example, JP H08-3498A, WO 2000/513396, WO 2008/524400, WO 2009/515007, and WO 2011/515535. Either inorganic pigments or organic pigments may be used as raw materials for the self-dispersible pigment. Examples of pigments suitable for such treatment include carbon black products such as MA-8 and MA-100 manufactured by Mitsubishi Chemical Corporation. The self-dispersible pigment may also be a commercially available product. Examples of commercially available products include CAB-O-JET^{®} 200, CAB-O-JET^{®} 250C, CAB-O-JET^{®} 260M, CAB-O-JET^{®} 270Y, CAB-O-JET^{®} 300, CAB-O-JET^{®} 400, CAB-O-JET^{®} 450C, CAB-O-JET^{®} 465M, and CAB-O-JET^{®} 470Y, manufactured by Cabot Corporation; BONJET^{®} BLACK CW-2 and BONJET^{®} BLACK CW-3, manufactured by Orient Chemical Industries, Ltd.; and LIOJET^{®} WD BLACK 002C, manufactured by Artience Co., Ltd.

The dye is not particularly limited, and examples thereof include direct dyes, acid dyes, basic dyes, and reactive dyes. Specific examples of the dyes include C.I. Direct Black, C.I. Direct Blue, C.I. Direct Red, C.I. Direct Yellow, C.I. Direct Orange, C.I. Direct Violet, C.I. Direct Brown, C.I. Direct Green, C.I. Acid Black, C.I. Acid Blue, C.I. Acid Red, C.I. Acid Yellow, C.I. Acid Orange, C.I. Acid Violet, C.I. Basic Black, C.I. Basic Blue, C.I. Basic Red, C.I. Basic Violet, and C.I. Food Black. Examples of the C.I. Direct Black dyes include C.I. Direct Black 17, 19, 32, 51, 71, 108, 146, 154, and 168. Examples of the C.I. Direct Blue dyes include C.I. Direct Blue 6, 22, 25, 71, 86, 90, 106, and 199. Examples of the C.I. Direct Red dyes include C.I. Direct Red 1, 4, 17, 28, 83, and 227. Examples of the C.I. Direct Yellow dyes include C.I. Direct Yellow 12, 24, 26, 86, 98, 132, 142, and 173. Examples of the C.I. Direct Orange dyes include C.I. Direct Orange 34, 39, 44, 46, and 60. Examples of the C.I. Direct Violet dyes include C.I. Direct Violet 47 and 48. Examples of the C.I. Direct Brown dyes include C.I. Direct Brown 109. Examples of the C.I. Direct Green dyes include C.I. Direct Green 59. Examples of the C.I. Acid Black dyes include C.I. Acid Black 2, 7, 24, 26, 31, 52, 63, 112, and 118. Examples of the C.I. Acid Blue dyes include C.I. Acid Blue 9, 22, 40, 59, 90, 93, 102, 104, 117, 120, 167, 229, and 234. Examples of the C.I. Acid Red dyes include C.I. Acid Red 1, 6, 32, 37, 51, 52, 80, 85, 87, 92, 94, 115, 180, 256, 289, 315, and 317. Examples of the C.I. Acid Yellow dyes include C.I. Acid Yellow 11, 17, 23, 25, 29, 42, 61, and 71. Examples of the C.I. Acid Orange dyes include C.I. Acid Orange 7 and 19. Examples of the C.I. Acid Violet dyes include C.I. Acid Violet 49. Examples of the C.I. Basic Black dyes include C.I. Basic Black 2. Examples of the C.I. Basic Blue dyes include C.I. Basic Blue 1, 3, 5, 7, 9, 24, 25, 26, 28, and 29. Examples of the C.I. Basic Red dyes include C.I. Basic Red 1, 2, 9, 12, 13, 14, and 37. Examples of the C.I. Basic Violet dyes include C.I. Basic Violet 7, 14, and 27. Examples of the C.I. Food Black dyes include C.I. Food Black 1 and 2.

The solid content of the colorant (colorant solid content) based on the total weight of the printer liquid is not particularly limited and may be appropriately determined depending on a desired optical density, chroma, or the like. The solid content of the colorant may be, for example, from 0.10 wt% to 20.00 wt%, from 1.00 wt% to 15.00 wt%, or from 2.00 wt% to 10.00 wt%.

In the printer liquid of the present disclosure, the colorant is an optional component. Accordingly, even when the printer liquid of the present disclosure contains no colorant, the printer liquid can still exhibit the effects of the present disclosure, namely excellent preservability and solubility, as long as it contains the penetrant and the preservative.

The printer liquid of the present disclosure may further include, as needed, at least one selected from water as a solvent, a pH adjuster, a surfactant, a viscosity modifier, and a mildewproofing agent. The pH adjuster, the surfactant, the viscosity modifier, and the mildewproofing agent may all be plant-derived additives. The printer liquid of the present disclosure may include only plant-derived materials for all of the colorant, the penetrant, the preservative, the pH adjuster, the surfactant, the viscosity modifier, and the mildewproofing agent.

The water may be, for example, ion-exchanged water or purified water.

The content of the water based on the total weight of the printer liquid may be, for example, from 10.00 wt% to 90.00 wt%, or from 20.00 wt% to 80.00 wt%. The content of the water may also be the remainder of the other raw materials.

Examples of the pH adjuster include alkali metal hydroxides, alkali metal carbonates, hydroxides of Group 2 to Group 12 elements, carbonates of Group 2 to Group 12 elements, and amines. Specific examples of the pH adjuster include sodium bicarbonate, potassium carbonate, calcium carbonate, sodium hydroxide, sodium carbonate, triethanolamine, N-butyldiethanolamine, sodium citrate (disodium citrate, trisodium citrate), sodium bicarbonate, potassium phosphate (monopotassium phosphate, dipotassium hydrogen phosphate, tripotassium phosphate), trisodium phosphate, sodium phosphate (sodium hydrogen phosphate, disodium hydrogen phosphate), and sodium dihydrogen pyrophosphate. Preferred examples of the pH adjuster include sodium bicarbonate, potassium carbonate, calcium carbonate, sodium hydroxide, sodium carbonate, triethanolamine, and N-butyldiethanolamine. One type of pH adjuster may be used, or two or more types of pH adjusters may be used.

The printer liquid of the present disclosure has a pH of 7.0 or higher. The printer liquid of the present disclosure may have a pH of 7.5 or higher. Here, β-phenylacrylic acid is a weakly acidic compound and has a low acid dissociation constant. Therefore, when the pH of the printer liquid is, for example, 7.0 or higher, the solubility of the β-phenylacrylic acid in the printer liquid increases.

The surfactant is not particularly limited and may be appropriately selected depending on the intended purpose, and commercially available products may be used. Specific examples of the surfactant include silicone-based surfactants and acetylene-based surfactants.

Examples of commercially available silicone-based surfactants include Silface^{®} SAG-002, Silface^{®} SAG-005, and Silface^{®} SAG-503A, manufactured by Nisshin Chemical Industry Co., Ltd.

Examples of commercially available acetylene-based surfactants include Olfine^{®} E1004, Olfine^{®} E1008, and Olfine^{®} E1010, manufactured by Nisshin Chemical Industry Co., Ltd.; Surfynol^{®} 440, Surfynol^{®} 465, and Surfynol^{®} 485, also manufactured by Nisshin Chemical Industry Co., Ltd.; and Acetylenol^{®} E40 and Acetylenol^{®} E100, manufactured by Kawaken Fine Chemicals Co., Ltd.

In addition to or in place of the silicone-based surfactants and the acetylene-based surfactants, the printer liquid of the present disclosure may include other surfactants. Examples of the other surfactants include nonionic surfactants manufactured by Kao Corporation, such as the EMULGEN^{®} series, the RHEODOL^{®} series, the EMASOL^{®} series, the EXCEL^{®} series, the EMANON^{®} series, the AMIET^{®} series, and the AMINON^{®} series; nonionic surfactants manufactured by Toho Chemical Industry Co., Ltd., such as the SOLBON^{®} series; nonionic surfactants manufactured by Lion Corporation, such as the DOBANOX^{®} series, the LEOCOL^{®} series, the LEOX^{®} series, the LAOL/LEOCOL^{®} series, the LIONOL^{®} series, the CADENAX^{®} series, the LIONON^{®} series, and the LEOFAT^{®} series; nonionic surfactants manufactured by Clariant, such as the Genapol^{®} series and the Genagen^{®} series; anionic surfactants manufactured by Kao Corporation, such as the EMAL^{®} series, the LATEMUL^{®} series, the VENOL^{®} series, the NEOPELEX^{®} series, NS SOAP, KS SOAP, OS SOAP, and the PELEX^{®} series; anionic surfactants manufactured by Lion Corporation, such as the LIPOLAN^{®} series, the LIPON^{®} series, the SUNNOL^{®} series, the LIPOTAC^{®} TE series, the ENAGICOL^{®} series, the LIPAL^{®} series, and the LOTAT^{®} series; and cationic surfactants such as Catiogen^{®} ES-OW and Catiogen^{®} ES-L, manufactured by Dai-Ichi Kogyo Seiyaku Co., Ltd.

One type of surfactant may be used, or two or more types of surfactants may be used.

The content of the surfactant based on the total weight of the printer liquid may be, for example, from 0.10 wt% to 10.00 wt%, or from 0.50 wt% to 5.00 wt%.

### (Inkjet Recording Apparatus and Inkjet Ejection Method)

Next, the inkjet recording apparatus and the inkjet ejection method of the present disclosure will be described.

The inkjet recording apparatus of the present disclosure comprises an inkjet head, and the inkjet head is configured to eject the printer liquid of the present disclosure.

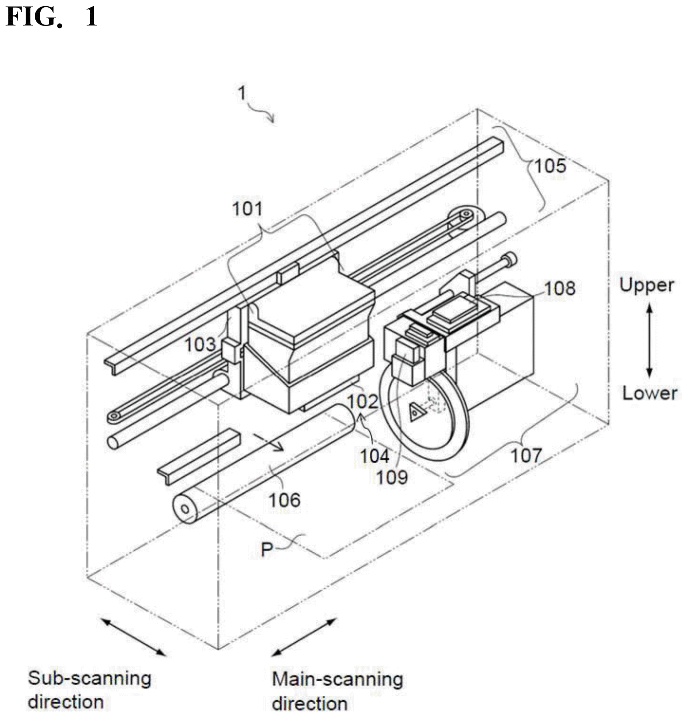

FIG. 1 illustrates an example configuration of the inkjet recording apparatus. As shown in the figure, the inkjet recording apparatus 1 includes, as its main components, an ink cartridge 101, an inkjet head 102, a carriage 103, a drive unit 105, a platen roller 106, and a purge unit 107. Although not illustrated, the ink cartridge 101 and the inkjet head 102 may be connected by an ink flow path, and the printer liquid of the present disclosure stored in the ink cartridge 101 may be supplied to the ink flow path, and the inkjet head 102 may eject the printer liquid onto a recording medium P that is a recording target. Examples of the recording medium P include plain paper and glossy paper.

The ink cartridge 101 accommodates the printer liquid of the present disclosure. The housing of the ink cartridge that accommodates the printer liquid may be, for example, a conventionally known housing.

The inkjet head 102 ejects ink toward the recording medium P, which is the recording target. The ink cartridge 101 and a head unit 104 are mounted on the carriage 103. The drive unit 105 reciprocates the carriage 103 in the main scanning direction. When an image is recorded on the recording medium P, the carriage 103 reciprocates in the main scanning direction, and the inkjet head 102 ejects ink, thereby recording on the recording medium P.

The drive unit 105 may be, for example, a conventionally known drive unit (see, for example, JP 2008-246821A). The platen roller 106 extends in the main scanning direction.

The purge unit 107 suctions defective ink containing air bubbles or the like that has accumulated inside the inkjet head 102. The purge unit 107 may be, for example, a conventionally known purge unit (see, for example, JP 2008-246821A).

As shown in FIG. 1, in the main scanning direction, a wiper member 109 is disposed adjacent to the purge unit 107 between the purge unit 107 and the platen roller 106. The wiper member 109 is a rubber blade in the form of a plate, and wipes the nozzle-forming surface of the inkjet head 102 as the carriage 103 moves.

In FIG. 1, the cap 108 contacts the nozzle-forming surface of the inkjet head 102 and covers the plurality of nozzles. When recording is completed, the carriage 103 moves to a standby position where the inkjet head 102 faces the cap 108. The cap 108 then approaches the inkjet head 102 and contacts the nozzle-forming surface, thereby covering the plurality of nozzles formed on the nozzle-forming surface.

In the inkjet recording apparatus 1 of the present example, the ink cartridge 101 is mounted on the carriage 103 together with the inkjet head 102; however, this is not limiting. For example, the ink cartridge 101 may be disposed within the inkjet recording apparatus 1 without being mounted on the carriage 103. Specifically, the ink cartridge 101 and the inkjet head 102 mounted on the carriage 103 may be fluidly connected through an ink flow path such as a tube, and ink may be supplied from the ink cartridge 101 to the inkjet head 102. In place of the ink cartridge 101, an ink bottle having a bottle shape may be used. In this case, the inkjet recording apparatus 1 includes an ink tank fixed inside the apparatus, and the ink tank has a filling port. A user inserts the ink bottle into the filling port of the ink tank and replenishes the ink from the ink bottle into the ink tank.

A recording process using the inkjet recording apparatus 1 is performed, for example, as follows. First, the recording medium P is supplied from the rear side or the lower side of the inkjet recording apparatus 1. The recording medium P is transported by the platen roller 106 to a region facing the inkjet head 102. The transported recording medium P is then recorded with an image or the like by ejecting the printer liquid from the inkjet head 102. Thereafter, the recorded recording medium P is discharged from the inkjet recording apparatus 1. In FIG. 1, the transport mechanism and the discharge mechanism of the recording medium P before reaching the platen roller 106 are omitted from illustration.

In the apparatus shown in FIG. 1, a serial-type inkjet head is employed; however, a line-type inkjet head may also be used. The apparatus shown in FIG. 1 may also be an apparatus that adopts a roll-to-roll configuration in which the leading edge of a roll paper is wound by a take-up mechanism. The serial-type inkjet head is an inkjet head that performs printing while being reciprocated in the width direction of the recording medium. The line-type inkjet head has a length greater than the maximum width of the recording medium that can be recorded by the inkjet recording apparatus 1, and therefore the inkjet head does not reciprocate in the width direction. An inkjet recording apparatus equipped with a line-type inkjet head performs printing by ejecting ink toward the paper from the inkjet head while transporting the paper.

Next, the inkjet ejection method of the present disclosure is an inkjet ejection method that includes an ejection step in which the printer liquid of the present disclosure is ejected from an inkjet head. The inkjet ejection method of the present disclosure may be carried out, for example, using the inkjet recording apparatus of the present disclosure. The recording includes printing characters or images.

### (EXAMPLES)

Examples of the present disclosure will be described below together with comparative examples. It should be noted that the present disclosure is not limited or restricted by the following examples and comparative examples.

### (Examples 1 to 17, Comparative Examples 1 to 4)

The raw materials other than the colorant in the compositions of the printer liquids shown in Table 1 below were uniformly mixed. Next, the colorant was added to the mixed liquid and uniformly mixed again. Thereafter, the mixture containing the colorant was filtered using a cellulose acetate membrane filter (pore size: 3.00 µm) manufactured by Toyo Roshi Kaisha, Ltd., thereby obtaining the printer liquids of Examples 1 to 17 and Comparative Examples 1 to 4 shown in Table 1.

Here, glycerin, which is a humectant, is a non-volatile substance and therefore hardly evaporates. Accordingly, the greater the amount of glycerin added, the more the evaporation characteristics described later tend to improve. On the other hand, if the amount added is too high, the viscosity increases, which may affect the ejection of the printer liquid (i.e., the printer liquid may become unable to be ejected). Therefore, the content of glycerin was set to the amounts shown in Table 1 so that the viscosity of the printer liquid and the evaporation characteristics described later would be optimized.

For each of the printer liquids of Examples 1 to 17 and Comparative Examples 1 to 4, (1) environmental compatibility, (2) solubility, (3) preservability, and (4) evaporation characteristics were evaluated according to the methods described below.

### (1) Environmental Compatibility

Each of the printer liquids of Examples 1 to 17 and Comparative Examples 1 to 4 was evaluated according to the evaluation criteria described below.

### (Evaluation Criteria for Environmental Compatibility)

A: A plant-derived preservative and a plant-derived penetrant are used.
C: A preservative or a penetrant that is not plant-derived is used.

### (2) Solubility

Each of the printer liquids of Examples 1 to 17 and Comparative Examples 1 to 4 was stirred and mixed using a magnetic stirrer. The solubility of the printer liquid after mixing was evaluated according to the evaluation criteria described below.

(Evaluation Criteria for Solubility)
A: Dissolved within 30 minutes.
B: Dissolved within 1 day.
C: Did not dissolve even after 1 day.

The presence or absence of dissolution was evaluated visually. In the evaluation of dissolution, when a raw material of the printer liquid remained undissolved in water, appearing as precipitates or floating matter, it was evaluated as "did not dissolve." When the raw material of the printer liquid dissolved in water and no precipitates or floating matter were observed, it was evaluated as "dissolved."

### (3) Preservability

Each of the printer liquids of Examples 1 to 17 and Comparative Examples 1 to 4 was applied onto Food Stamp Standard Agar (manufactured by Nissui Pharmaceutical Co., Ltd.) and stored at 35°C. Thereafter, the presence or absence of mold colonies on the standard agar was visually confirmed, and the preservability was evaluated according to the evaluation criteria described below.

### (Evaluation Criteria for Preservability)

A: No mold grows even after 5 days.
B: Mold grows after 3 days.
C: Mold grows within 3 days.

### (4) Evaporation Characteristics

Each of the printer liquids of Examples 1 to 17 and Comparative Examples 1 to 4 was placed in a No. 2 standard bottle in an amount of 5 g (hereinafter referred to as a "test sample"). The test sample was then stored for 5 days in a constant-temperature chamber at 60°C and 40% humidity with the bottle left uncapped. After storage, the test sample was removed from the chamber, capped, and allowed to stand for 1 day. Next, the test sample was inverted, and its fluidity was checked for 1 minute. The evaporation characteristics were evaluated according to the evaluation criteria described below. When the test sample exhibited fluidity within 1 minute, it was evaluated as "fluid." When the test sample did not exhibit fluidity within 1 minute, the bottle was lifted to a height of approximately 15 cm above a desk and struck firmly three times against the side of the bottle to apply impact, and the fluidity after impact was checked. When the test sample exhibited fluidity after the impact, it was evaluated as "thixotropic." When the test sample did not exhibit fluidity even after the impact, it was evaluated as "neither fluid nor thixotropic." Even in cases where the test sample was evaluated as "thixotropic," the printer liquid can still be used by performing a purge operation using the purge unit described above.

### (Evaluation Criteria for Evaporation Characteristics)

A: Fluid.
B: Thixotropic.
C: Neither fluid nor thixotropic.

The compositions and evaluation results of the printer liquids of Examples 1 to 17 and Comparative Examples 1 to 4 are shown in Table 1.

As shown in Table 1, the printer liquids of Examples 1 to 17 exhibited evaluation results of "B" or higher in environmental compatibility, solubility, and preservability.

Furthermore, Examples 1 to 15, in which the content of β-phenylacrylic acid was from 0.01 wt% to 0.50 wt% and the content ratio (a/b) of the content (a) of 1,3-propanediol to the content (b) of β-phenylacrylic acid was 40.00 or more, exhibited solubility evaluation results of "A" in all cases.

Furthermore, Examples 1 to 10 and 12 to 15, in which the content ratio (a/b) of the content (a) of 1,3-propanediol to the content (b) of β-phenylacrylic acid was from 40.00 to 60.00, exhibited evaluation results of "B" or higher in environmental compatibility, solubility, and preservability, and also exhibited "B" or higher in evaporation characteristics.

In addition, Examples 1, 3, 4, 7 to 9, and 12 to 15, in which the content of 1,3-propanediol was 4.50 wt% or more or from 4.50 wt% to 20.00 wt%, the content of β-phenylacrylic acid was from 0.10 wt% to 0.40 wt%, and the content ratio (a/b) of the content (a) of 1,3-propanediol to the content (b) of β-phenylacrylic acid was from 45.00 to 55.00, exhibited evaluation results of "A" or higher in all of environmental compatibility, solubility, preservability, and evaporation characteristics.

On the other hand, Comparative Example 1, which did not contain a penetrant, exhibited evaluation results of "C" in solubility and preservability. In addition, as shown in Comparative Example 2, when a petroleum-derived penetrant was used in an attempt to improve solubility and preservability, the evaluation result for environmental compatibility became "C." Further, Comparative Example 3, in which the pH was less than 7.0, exhibited evaluation results of "C" in solubility and preservability, even when both plant-derived 1,3-propanediol and β-phenylacrylic acid were contained. Moreover, as shown in Comparative Example 4, when no preservative was added, the evaluation result for preservability was "C."

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below:

Some or all of the above-described embodiments and examples may also be described as follows, but are not limited thereto:
(1) A liquid for an inkjet printer, comprising:
   a plant-derived penetrant comprising plant-derived 1,3-propanediol; and
   a plant-derived preservative comprising β-phenylacrylic acid,
   wherein the pH of the liquid for an inkjet printer is 7.0 or higher.
(2) The liquid for an inkjet printer according to (1), wherein based on the total weight of the printer liquid, the content of the β-phenylacrylic acid is 0.01 wt% or more and 0.50 wt% or less, and
   the ratio of the content of the 1,3-propanediol to the content of the β-phenylacrylic acid is 40.00 or more.
(3) The liquid for an inkjet printer according to (2), wherein
   the ratio of the content of the 1,3-propanediol to the content of the β-phenylacrylic acid is 40.00 or more and 60.00 or less.
(4) The liquid for an inkjet printer according to (3), wherein
   based on the total weight of the liquid for an inkjet printer:
   the content of the 1,3-propanediol is 4.50 wt% or more,
   the content of the β-phenylacrylic acid is 0.10 wt% or more and 0.40 wt% or less, and
   the ratio of the content of the 1,3-propanediol to the content of the β-phenylacrylic acid is 45.00 or more and 55.00 or less.
(5) The liquid for an inkjet printer according to (4), wherein
   based on the total weight of the liquid for an inkjet printer, the content of the 1,3-propanediol is 4.50 wt% or more and 20.00 wt% or less.
(6) The liquid for an inkjet printer according to any one of (1) to (5), further comprising a colorant.
(7) The liquid for an inkjet printer according to (6), wherein
   the colorant comprises at least one selected from the group consisting of capsicum pigment, gardenia red pigment, gardenia yellow pigment, safflower yellow pigment, and gardenia blue pigment.
(8) An inkjet recording apparatus comprising an inkjet head, wherein
   the inkjet head is configured to eject the liquid for an inkjet printer according to any one of (1) to (7).
(9) An inkjet ejection method comprising an ejection step, wherein the liquid for an inkjet printer according to any one of (1) to (7) is ejected from an inkjet head.

### (INDUSTRIAL APPLICABILITY)

According to the present disclosure, it is possible to provide a liquid for an inkjet printer that exhibits excellent preservability and solubility by using β-phenylacrylic acid as a preservative and employing a plant-derived penetrant. The liquid for an inkjet printer, the inkjet recording apparatus, and the inkjet ejection method of the present disclosure can be widely applied to inkjet recording on various types of recording media.

## Claims

1. A liquid for an inkjet printer, comprising:
a plant-derived penetrant comprising plant-derived 1,3-propanediol; and
a plant-derived preservative comprising β-phenylacrylic acid,
wherein the pH of the liquid for an inkjet printer is 7.0 or higher.

2. The liquid for an inkjet printer according to claim 1, wherein
based on the total weight of the liquid for an inkjet printer,
the content of the β-phenylacrylic acid is 0.01 wt% or more and 0.50 wt% or less, and
the ratio of the content of the 1,3-propanediol to the content of the β-phenylacrylic acid is 40.00 or more.

3. The liquid for an inkjet printer according to claim 2, wherein
the ratio of the content of the 1,3-propanediol to the content of the β-phenylacrylic acid is 40.00 or more and 60.00 or less.

4. The liquid for an inkjet printer according to claim 3, wherein
based on the total weight of the liquid for an inkjet printer, the content of the 1,3-propanediol is 4.50 wt% or more, and the content of the β-phenylacrylic acid is 0.10 wt% or more and 0.40 wt% or less, and
the ratio of the content of the 1,3-propanediol to the content of the β-phenylacrylic acid is 45.00 or more and 55.00 or less.

5. The liquid for an inkjet printer according to claim 4, wherein
based on the total weight of the liquid for an inkjet printer, the content of the 1,3-propanediol is 4.50 wt% or more and 20.00 wt% or less.

6. The liquid for an inkjet printer according to any one of claims 1 to 5, further comprising a colorant.

7. The liquid for an inkjet printer according to claim 6, wherein
the colorant comprises at least one selected from the group consisting of capsicum pigment, gardenia red pigment, gardenia yellow pigment, safflower yellow pigment, and gardenia blue pigment.

8. An inkjet recording apparatus comprising an inkjet head, wherein
the inkjet head is configured to eject the liquid for an inkjet printer according to any one of claims 1 to 7.

9. An inkjet ejection method comprising an ejection step, wherein
the liquid for an inkjet printer according to any one of claims 1 to 7 is ejected from an inkjet head.
